# EUROPEAN PATENT SPECIFICATION

(11) **EP 2 695 853 B1**
(45) Date of publication and mention of the grant of the patent: **10.10.2018**
(21) Application number: 12461536.0
(22) Date of filing: 08.08.2012
(51) Int. Cl.: C01B 3/06

(54) **Portable hydrogen generator**
Tragbarer Wasserstoffgenerator
Générateur d'hydrogène portable

(43) Date of publication of application: 12.02.2014
(73) Proprietor: Airbus Defence and Space GmbH, 82024 Taufkirchen (DE)
(72) Inventor: Godula-Jopek, Agata, 82024 Taufkirchen (DE); Brandstetter, Armin, 81927 München (DE); Stobinski, Leszek, 03-337 Warszawa (PL)
(74) Representative: LKGLOBAL Lorenz & Kopf PartG mbB Patentanwälte

(56) References cited:
- EP-A2- 1 306 917
- WO-A2-2010/087698
- NL-C- 1 037 618
- US-A1- 2003 037 487
- US-A1- 2004 148 857
- US-A1- 2007 036 711

## Description

The present invention is directed to a portable hydrogen generating reactor as well as the use of a portable hydrogen generating reactor for generating hydrogen.

Hydride compounds are widely used as hydrogen storage materials. The particular interest for such compounds resides in the fact that their volumetric hydrogen densities are positive and, thus, allow the storage of large quantities of hydrogen in a small volume. In this regard, a wide variety of hydride compounds like, lithium hydride, sodium hydride, potassium hydride, sodium borohydride, lithium borohydride, potassium borohydride and calcium borohydride, lithium aluminium hydride, sodium aluminium hydride, potassium aluminium hydride, magnesium hydride, calcium hydride etc. are known of which sodium borohydride has one of the highest specific hydrogen yield and is thus preferably used as hydrogen storage material. The hydrogen release is initiated by contacting e.g. the sodium borohydride with water such that the borohydride decomposes in accordance with formula I:

NaBH₄ + 2H₂O → 4H₂ + NaBO₂ + Q I

The existing hydrogen storage materials comprising hydride compounds are typically provided in solid forms such as powders having large particle sizes such as of above 500 nm or granules or pressed into pellets. One problem with such powders, granules and pellets however is that these forms severely decrease the solubility in water and thus its reaction rate with water. Furthermore, said form also decreases the available surface area of the hydrogen storage material. Accordingly, the provision of powders having large particle sizes such as of above 500 nm or granules and pellets comprising such particles also results in decreased hydrogen release efficiencies. Consequently, a high demand of hydrogen requires large amounts of powders, pellets or granules. Furthermore, many of the hydride compounds are hygroscopic by nature and thus a relatively short contact time of the hydride with e.g. watery air may actually lead to an uncontrolled release of hydrogen from the hydride compounds.

In view of the foregoing, a further drawback is that these hydrogen generating materials require appropriate devices for storage, handling, dosing and transportation.

In the art, several devices for hydrogen storage and generation have been proposed. For example, US 2003/0009942 A1 describes an arrangement for generating hydrogen gas utilizes differential pressure to transport fuel and spent fuel components without requiring an electrically powered fuel delivery pump. US 2004/0148857 A1 relates to a system for hydrogen generation having a volume-exchange system for the storage of fuel solution and discharged product and a hydrogen filtration system. US 2003/0037487 A1 describes a hydrogen generation system includes a fuel container, a spent fuel container, a catalyst system and a control system for generating hydrogen in a manner which provides for a compact and efficient construction while producing hydrogen from a reaction involving a hydride solution such as sodium borohydride. US 2006/0225350 A1 relates to a system comprising a hydrogen generator having a fuel chamber for a liquid fuel, a reactor chamber where the fuel undergoes a reaction to produce hydrogen, and at least two sensors in communication with the reactor chamber, the sensors measuring at least two system parameters of the hydrogen generator. US 2010/0150824 A1 describes a hydrogen generator which comprises (a) a chamber having a hydrogen-containing material disposed therein; (b) a first fluidic pathway containing said chamber, said first fluidic pathway including an upstream portion which is upstream of said chamber, and a downstream portion which is downstream from said chamber; (c) a second fluidic pathway which does not include said chamber, and which is adjoined to said first fluidic pathway downstream from said chamber; and (d) a reservoir containing a liquid medium in which said hydrogen-containing material is soluble, said reservoir being in fluidic communication with at least one of said first and second fluidic pathways.

NL 1 037 618 discloses a hydrogen generator which can be used in an inhaler for driving the heating system for evaporating the medication.The inhaler has the size of a cigarette and is portable.The generator releases hydrogen by mixing a fuel in the form of a solid chemical hydride dispersed in an inert carrier fluid like oil, and an activator comprising water and substances that facilitate the release of hydrogen from the chemical hydride. It comprises a fuel storage chamber suitable for containing said suspension and an activator chamber wherein each of said chambers has a flexible volume and is connected to a reaction chamber via a supply line. The reaction chamber has three zones (mixing zone, buffer zone and reaction zone). The reaction chamber is provided with an inlet for the fuel, an inlet for the activator and, in the buffer zone, an inlet for adding the standard activator or an alternative activator. It is also provided with two outlets for the spent fuel and with a hydrogen gas release outlet. However, the described systems have the disadvantage that the generation of hydrogen is carried out in complex systems, which make it not easy to handle and thus require high safety standards. Furthermore, the main parts of the known hydrogen generators are typically made from stainless steel such that the systems are very heavy and thus make them unsuitable for transportation and application under field conditions.

In view of the foregoing, improving the systems for the generation of hydrogen still remains of interest to the skilled man. It would be especially desirable to provide an alternative or improved hydrogen generating reactor which is very light and easy to transport and especially allows a more efficient and controlled generation of hydrogen, especially in field, harsh conditions.

The foregoing and other objects are solved by the provision of a portable hydrogen generating according to claim 1.

The inventors of the present invention surprisingly found out that such a portable hydrogen generating reactor enables the skilled person to generate hydrogen in a more efficient and controlled way and that it is very light and easy to transport. In particular, this is achieved by providing at least one reaction chamber in combination with at least one catalyst chamber and at least one hydrogen-containing suspension chamber, respectively, which are independently connected to at least one inlet of the at least one reaction chamber and wherein at least one valve is located between the at least one catalyst chamber and the at least one reaction chamber and the at least one hydrogen-containing suspension chamber and the at least one reaction chamber, respectively. Furthermore, the portable hydrogen generating reactor is made from an elastic plastic material. Thus, the instant portable hydrogen generating reactor enables an improved generation of hydrogen.

According to another aspect of the present invention, the use of a portable hydrogen generating reactor for generating hydrogen is provided. Advantageous embodiments of the present invention are defined in the corresponding sub-claims.

When in the following reference is made to preferred embodiments or technical details of the inventive portable hydrogen generating reactor, it is to be understood that these preferred embodiments or technical details also refer to the inventive use of the portable hydrogen generating reactor for generating hydrogen as defined herein and vice versa (as far as applicable). If, for example, it is set out that at least one outlet of the at least one reaction chamber of the inventive portable hydrogen generating reactor is a gas outlet also the at least one outlet of the at least one reaction chamber of the inventive use is a gas outlet.

The present invention will be described with respect to particular embodiments and with reference to certain figures but the invention is not limited thereto but only by the claims. Terms as set forth hereinafter are generally to be understood in their common sense unless indicated otherwise.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

According to one embodiment of the present invention, at least one outlet of the at least one reaction chamber is a gas outlet, preferably a hydrogen gas outlet. It is preferred that the at least one gas outlet comprises a valve which opens automatically under a hydrogen pressure of at least 1 bar.

According to the present invention, the at least one reaction chamber is provided with three inlets and three outlets, preferably one outlet is a hydrogen gas outlet and one outlet is a gas outlet provided with a safety valve. It is preferred that one inlet of the at least one reaction chamber is a water inlet and/or one outlet is a water outlet. It is further preferred that the water outlet is integrated in the water inlet.

According to the present invention, the at least one reaction chamber comprises an inner ziplock dividing the at least one reaction chamber in a hydrogen storage zone and a hydrogen generating zone. It is preferred that the inner ziplock comprises at least one channel having a diameter of from 0.1 to 1 mm. It is further preferred that the at least one channel of the inner ziplock opens automatically under a hydrogen pressure of at least 1 bar generated in the hydrogen generating zone.

According to one embodiment of the present invention, at least two outlets of the at least one reaction chamber, preferably a hydrogen gas outlet and a gas outlet provided with a safety valve, are located at the hydrogen storage zone of the at least one reaction chamber and/or at least two inlets of the at least one reaction chamber are located at the hydrogen generating zone of the at least one reaction chamber and/or a water inlet of the at least one reaction chamber is located at the hydrogen generating zone of the at least one reaction chamber and/or a water outlet of the at least one reaction chamber is located at the hydrogen generating zone of the at least one reaction chamber. It is preferred that at least two inlets located at the hydrogen generating zone are independently connected to the at least one catalyst chamber and the at least one hydrogen-containing suspension chamber.

According to another embodiment of the present invention, the portable hydrogen generating reactor is made from an elastic plastic material selected from the group comprising among others polyurethane, polyethylene, polypropylene, silicon rubber, polyvinylchloride and mixtures thereof.

According to yet another embodiment of the present invention, the at least one catalyst chamber comprises a catalyst-containing liquid medium.

According to the present invention, the at least one hydrogen-containing suspension chamber comprises a suspension containing at least one water-free liquid medium and hydrogen-releasing particles dispersed therein.

The present invention is now described in more detail:
Thus, the present invention provides a portable hydrogen generating reactor, comprising
a) at least one reaction chamber provided with at least three inlets and at least two outlets,
b) at least one catalyst chamber connected to at least one inlet of the at least one reaction chamber, wherein at least one valve is located between the at least one catalyst chamber and the at least one reaction chamber, and
c) at least one hydrogen-containing suspension chamber connected to at least one inlet of the at least one reaction chamber and wherein the at least one hydrogen-containing suspension chamber is suitable for storing and releasing a hydrogen containing suspension comprising at least one water-free liquid medium and hydrogen-releasing particles, wherein all parts of the portable hydrogen generating reactor are made from an elastic plastic material and wherein the at least one reaction chamber comprises an inner ziplock dividing the at least one reaction chamber in a hydrogen storage zone and a hydrogen generating zone.

In accordance with the present invention, the term "water-free" liquid medium refers to any organic and/or inorganic liquid having a water content of below 1 Vol.-%, preferably of below 0.5 Vol.-%, more preferably of below 0.1 Vol.-% and most preferably of below 0.05 Vol.-%, based on the total volume of the liquid medium. In one embodiment of the present invention, the water-free liquid medium is without any water content.

A "suspension" in the meaning of the present invention comprises insoluble and non-reactive hydride-containing particles dispersed in a liquid medium and optionally further additives and usually contains large amounts of hydride-containing particles and, thus, is more viscous and generally of higher density than the liquid medium from which it is formed. It is accepted in the art that the general term "dispersion" inter alia covers "suspensions" as a specific type of dispersion.

It should be noted that there are no specific restrictions regarding the at least one water-free liquid medium provided that the at least one liquid medium is water-free.

Accordingly, the at least one water-free liquid medium may be any kind of organic and/or inorganic liquid medium. For example, the at least one water-free liquid medium may be any kind of organic and/or inorganic liquid medium having a water content of below 1 Vol.-%, preferably of below 0.5 Vol.-%, more preferably of below 0.1 Vol.-% and most preferably of below 0.05 Vol.-%, based on the total volume of the at least one water-free liquid medium. In one preferred embodiment of the present invention, the water-free liquid medium is without any water content.

In one embodiment of the present invention, the at least one water-free liquid medium is an organic liquid medium. For example, the at least one water-free liquid medium is selected from the group comprising silicon oil, glycerine, ethylene glycol, hexane, petrol and mixtures thereof. For example, the at least one water-free liquid medium is silicon oil. The term "at least one" water-free liquid medium means that one or more kinds of liquid medium can be provided.

Accordingly, it should be noted that the at least one water-free liquid medium may be a mixture of two or more kinds of liquid mediums. For example, if the at least one water-free liquid medium is a mixture of two or more liquid mediums, one liquid medium is silicon oil, while the second or further liquid medium may be selected from the group comprising glycerine, ethylene glycol, hexane, petrol and mixtures thereof.

It is preferred that the at least one water-free liquid medium comprises silicon oil in an amount of at least 50 Vol.-%, more preferably of at least 60 Vol.-%, even more preferable of at least 70 Vol.-% and most preferably of at least 80 Vol.-%, based on the total volume of the at least one water-free liquid medium. For example, the at least one water-free liquid medium comprises silicon oil in an amount of at least 90 Vol.-% or of at least 98 Vol.-%, based on the total volume of the at least one water-free liquid medium.

In this regard, it is appreciated that even if the at least one water-free liquid medium comprises a mixture of liquid mediums, the overall water content of said mixture does not exceed 1 Vol.-%, based on the total volume of the at least one liquid medium. It is preferred that the overall water content of said mixture is of below 0.5 Vol.-%, more preferably of below 0.1 Vol.-% and most preferably of below 0.05 Vol.-%, based on the total volume of the at least one liquid medium. In one embodiment of the present invention, the water-free liquid medium is without any water content.

In one embodiment of the present invention, the at least one water-free liquid medium is one kind of water-free liquid medium. For example, the at least one water-free liquid medium consists of silicon oil.

In one embodiment of the present invention, the at least one water-free liquid medium is free of metal salts. In accordance with the present invention, the term "free of metal salts" refers to a liquid having a salts content of below 0.1 wt.-%, preferably of below 0.05 wt.-%, more preferably of below 0.01 wt.-% and most preferably of below 0.005 wt.-%, based on the total weight of the at least one water-free liquid medium. In one embodiment of the present invention, the water-free liquid medium is free of any metal salts.

For example, the at least one water-free liquid medium is free of hydroxide salts. It is preferred that the at least one water-free liquid medium is free of hydroxide salts, wherein the cation part of the hydroxide salt is identical with the cation part of the metal borohydride. That is to say, the at least one water-free liquid medium is free of sodium hydroxide.

Additionally or alternatively, the at least one water-free liquid medium is a non-reductive liquid medium. In accordance with the present invention, the term "non-reductive" refers to a liquid medium comprising reductive components in an amount of below 0.1 wt.-%, preferably of below 0.05 wt.-%, more preferably of below 0.01 wt.-% and most preferably of below 0.005 wt.-%, based on the total weight of the at least one liquid medium. In one embodiment of the present invention, the water-free liquid medium is free of any non-reductive agents.

Typically, the at least one water-free liquid medium according to the present invention has a viscosity at room temperature in the range from 0.3 to 30 000 mPa·s, preferably in the range from 0.3 to 20 000 mPa·s and more preferably in the range from 0.3 to 10 000 mPa·s, as measured with a Brookfield viscometer. For example, the at least one water-free liquid medium according to the present invention has a viscosity at room temperature in the range from 100 to 10 000 mPa·s and more preferably in the range from 500 to 8 000 mPa·s, e.g. of about 5 000 mPa·s.

Furthermore, the hydrogen-containing suspension comprises hydrogen-releasing particles. It is preferred that the hydrogen-releasing particles are selected from the group comprising lithium hydride, sodium hydride, potassium hydride, sodium borohydride, lithium borohydride, potassium borohydride and calcium borohydride, lithium aluminium hydride, sodium aluminium hydride, potassium aluminium hydride, magnesium hydride, calcium hydride and mixtures thereof. For example, the hydrogen-releasing particles are sodium borohydride particles.

It is preferred that the hydrogen-releasing particles have a mean particle size *d*₅₀ of from 1 to 250 nm, as measured using scanning electron microscopy (SEM). For example, the hydrogen-releasing particles have a mean particle size *d*₅₀ of from 1 to 150 nm or from 1 to 100 nm, as measured using scanning electron microscopy (SEM).

Additionally or alternatively, it should be noted that the hydrogen-releasing particles may have a specific particle size distribution. In general, the hydrogen-releasing particles have a *d*₉₈ of below 250 nm as measured by the well known technique of scanning electron microscopy. In one embodiment of the present invention, the hydrogen-releasing particles have a *d*₉₈ in the range of from 1 to 250 nm, preferably in the range of from 1 to 150 nm and most preferably in the range of from 1 to 100 nm.

Throughout the present document, the "particle size" of hydrogen-releasing particles is described by its distribution of particle sizes. The value *dₓ* represents the diameter relative to which *x*% by weight of the particles have diameters less than *d*ₓ. This means that the *d*₂₀ value is the particle size at which 20 wt.-% of all particles are smaller, and the *d*₇₅ value is the particle size at which 75 wt.-% of all particles are smaller. The *d*₉₈ value is thus the weight median particle size, i.e. 98 wt.-% of all grains are smaller than this particle size.

The hydrogen-containing suspension preferably comprises the hydrogen-releasing particles in an amount of from 40 to 80 wt.-%, preferably of from 50 to 70 wt.-%, based on the total weight of the suspension. For example, the hydrogen-containing suspension preferably comprises the hydrogen-releasing particles in an amount of from 55 to 65 wt.-%, like about 60 wt.-%, based on the total weight of the suspension.

The hydrogen generation is preferably initiated by contacting the hydrogen-containing suspension with an aqueous solution.

An aqueous solution is understood to be a solution being merely composed of water. In one embodiment of the present invention, the aqueous solution comprises water in an amount of at least 30 wt.-%, preferably at least 50 wt.-% and most preferably at least 90 wt.-%, based on the total weight of the aqueous solution. For example, the aqueous solution comprises water in an amount of between 90 and 99 wt.-% or of between 95 and 98 wt.-%, based on the total weight of the aqueous solution. For example, the aqueous solution comprises a mixture of water and at least one water-miscible solvent. The at least one water-miscible solvent may be selected from the group comprising methanol, ethanol, acetone, urine, preferably filtrated urine, and mixtures thereof. For example, the aqueous solution comprises at least one water-miscible solvent in an amount of below 70 wt.-%, preferably of below 50 wt.-% and most preferably of below 10 wt.-%, based on the total weight of the aqueous solution. In one embodiment of the present invention, the aqueous solution is filtrated urine. Additionally or alternatively, the aqueous solution is water.

The hydrogen generation is carried out in the presence of at least one catalyst.

It is appreciated that the at least one catalyst may be any catalyst system promoting the hydrogen generation from hydrogen-releasing particles and suspensions made therefrom. The at least one catalyst may be in the form of a powder, dust, pellets, chips and mixtures thereof. In one embodiment of the present invention, the at least one catalyst is in the form of a powder.

For example, the at least one catalyst comprises metal particles or metal salts. If the at least one catalyst comprises metal particles, the at least one catalyst is preferably in the form of metal dust or metal powder. It is preferred that the at least one catalyst comprises metal particles selected from the group comprising copper, silver, gold, iron, nickel, cobalt, palladium, platinum, chromium, molybdenum, tungsten and mixtures thereof. For example, the at least one catalyst comprises iron dust or iron powder.

If the at least one catalyst comprises metal salts, the at least one catalyst is preferably in the form of a metal salt powder. In one embodiment of the present invention, the at least one catalyst comprises metal salts selected from the group comprising iron(II) chloride, iron(III) chloride, iron(II) nitrate, iron(III) nitrate, iron(II) acetate, iron(III) acetate, copper chloride, copper nitrate, copper acetate, palladium chloride, palladium nitrate, palladium acetate, gold chloride, gold nitrate, gold acetate, platinum(II) chloride, platinum(II) nitrate, platinum(II) acetate, platinum(IV) chloride, platinum(IV) nitrate, platinum(IV) acetate, nickel(II) chloride, nickel(III) chloride, cobalt(II) chloride, cobalt(III) chloride, chromium(III) chloride, cadmium chloride and mixtures thereof.

For example, the at least one catalyst comprises metal salts selected from the group comprising iron(III) chloride, iron(III) nitrate, iron(III) acetate and mixtures thereof. In one embodiment of the present invention, the at least one catalyst comprises iron(III) chloride.

The particles of the at least one catalyst preferably have a mean particle size *d*₅₀ of from 0.5 to 200 nm, more preferably of from 1 to 150 nm, even more preferably of from 1 to 100 nm and most preferably of from 1 to 50 nm.

Preferably, the at least one catalyst is present in at least one liquid medium and thus forms a catalyst solution or catalyst suspension.

A "catalyst suspension" in the meaning of the present invention comprises insoluble catalyst particles dispersed in a liquid medium and optionally further additives. It is accepted in the art that the general term "dispersion" inter alia covers "suspensions" as a specific type of dispersion. A "catalyst solution" in the meaning of the present invention refers to systems that merely comprise, preferably contain, dissolved catalyst particles and optionally minor amounts of discrete solid particles in the solvent. It is preferred that the catalyst solution contains dissolved particles in the solvent. The term "dissolved" in the meaning of the present invention refers to systems in which no discrete solid catalyst particles are observed in the solvent. In one preferred embodiment of the present invention, the liquid medium contains discrete solid catalyst particles in the solvent in an amount of ≤ 5 wt.-%, more preferably ≤ 2.5 wt.-%, even more preferably ≤ 1 wt.-% and most preferable ≤ 0.5 wt.-%, based on the total weight of the catalyst solution.

In one embodiment of the present invention, the at least one liquid medium may be any kind of organic and/or inorganic liquid medium. For example, the at least one liquid medium is selected from the group comprising silicon oil, glycerine, ethylene glycol, hexane, petrol, an aqueous solution and mixtures thereof. For example, the at least one liquid medium is silicon oil and/or an aqueous solution.

The term "at least one" liquid medium means that one or more kinds of liquid medium can be provided.

Accordingly, it should be noted that the at least one liquid medium may be a mixture of two or more kinds of liquid mediums. For example, if the at least one liquid medium is a mixture of two or more liquid mediums, one liquid medium is silicon oil, while the second or further liquid medium may be selected from the group comprising glycerine, ethylene glycol, hexane, petrol, an aqueous solution and mixtures thereof.

In one embodiment of the present invention, the at least one liquid medium is one kind of liquid medium. For example, the at least one liquid medium consists of silicon oil or an aqueous solution.

In one embodiment of the present invention, the at least one liquid medium may be any kind of organic and/or inorganic liquid medium being a water-free liquid medium, i.e. having a water content of below 1 Vol.-%, preferably of below 0.5 Vol.-%, more preferably of below 0.1 Vol.-% and most preferably of below 0.05 Vol.-%, based on the total volume of the at least one water-free liquid medium. For example, the at least one liquid medium being a water-free liquid medium is without any water content.

It is preferred that the at least one catalyst and the hydrogen-releasing particles are provided in the same kind of liquid medium. That is to say the liquid medium comprising the at least one catalyst and the water-free liquid medium comprising the hydrogen-releasing particles are of the same kind. For example, the liquid medium comprising the at least one catalyst and the water-free liquid medium comprising the hydrogen-releasing particles are silicone oil.

Alternatively, the aqueous solution used for initiating the hydrogen generation and the liquid medium comprising the at least one catalyst are of the same kind. That is to say the liquid medium comprising the at least one catalyst and the aqueous solution are of the same kind. With regard to the aqueous solution that may be used for the at least one catalyst it is referred to the comments provided above with regard to the aqueous solution used for initiating the hydrogen generation.

The liquid medium comprises the at least one catalyst preferably in an amount of below 25 wt.-%, more preferably of below 15 wt.-%, even more preferably of below 10 wt.-% and most preferably of below 5 wt.-%, based on the total weight of the obtained solution or suspension. For example, the liquid medium comprises the at least one catalyst in an amount of between 0.01 and 25 wt.-%, more preferably of between 0.1 and 15 wt.-%, even more preferably of between 0.5 and 10 wt.-% and most preferably of between 1 and 5 wt.-%, based on the total weight of the obtained solution or suspension.

The hydrogen generation from the hydrogen-containing suspension by using an aqueous solution and at least one catalyst, preferably in the form of a catalyst solution or catalyst suspension, is carried out in the at least one reaction chamber being part of the inventive portable hydrogen generating reactor. Preferably, the portable hydrogen generating reactor of the present invention comprises one reaction chamber in which the hydrogen generation is carried out.

One specific requirement of the at least one reaction chamber is that it can be fed with the hydrogen-containing suspension, the at least one catalyst and the aqueous solution initiating the decomposition of the hydrogen-containing particles in the hydrogen-containing suspension. It is thus required that the at least one reaction chamber is connected to the at least one catalyst chamber and the at least one hydrogen-containing suspension chamber, respectively. Furthermore, it is required that the at least one reaction chamber is provided with at least one inlet, preferably being a water inlet which is suitable for the aqueous solution.

One further specific requirement of the at least one reaction chamber is that it can release hydrogen. In this regard, it is preferred that the release of hydrogen from the at least one reaction chamber can be carried out under controlled conditions by using at least one outlet. In addition thereto, it is preferred that the at least one reaction chamber provides a safety means such as an outlet provided with a safety valve automatically releasing hydrogen if the hydrogen pressure exceeds a specific value in the at least one reaction chamber.

Thus, it is one requirement of the at least one reaction chamber that it is provided with at least three inlets and at least two outlets.

It is appreciated that at least one outlet of the at least one reaction chamber is a gas outlet. In one preferred embodiment of the present invention, the at least one gas outlet of the at least one reaction chamber is preferably a hydrogen gas outlet.

A valve or other means may be used to control the rate of hydrogen release from the at least one reaction chamber. Thus, it is appreciated that the at least one gas outlet, preferably a hydrogen gas outlet, of the at least one reaction chamber comprises a valve which opens automatically under hydrogen pressure which is generated in the at least one reaction chamber. For example, the at least one hydrogen gas outlet of the at least one reaction chamber preferably comprises a valve which opens automatically under a hydrogen pressure of at least 1 bar generated in the at least one reaction chamber or of at least 1.5 bar generated in the at least one reaction chamber.

In one embodiment of the present invention, the at least one gas outlet, preferably a hydrogen gas outlet, of the at least one reaction chamber preferably comprises a valve which opens automatically under a hydrogen pressure of between 1 and 3 bar generated in the at least one reaction chamber or of between 1.5 and 2.5 bar generated in the at least one reaction chamber.

It is appreciated that the valve of the at least one gas outlet, preferably the hydrogen gas outlet, may be any kind of valve well known to the man skilled in the art used for releasing hydrogen from a reactor device. It is preferred that the valve of the at least one gas outlet, preferably the hydrogen gas outlet, may be any kind of valve well known to the man skilled in the art which opens automatically under a hydrogen pressure of at least 1 bar generated in the at least one reaction chamber. For example, the valve of the at least one gas outlet, preferably the hydrogen gas outlet, is any kind of open-close valve known to the man skilled in the art. In one embodiment of the present invention, the valve of the at least one gas outlet, preferably the hydrogen gas outlet, is a spring valve.

In one embodiment of the present invention, one outlet of the at least one reaction chamber of the portable hydrogen generating reactor is a hydrogen gas outlet and one outlet is a safety means such as an outlet, preferably a gas outlet and more preferably a hydrogen gas outlet, provided with a safety valve.

It is appreciated that the safety means may be any kind of safety means well known to the man skilled in the art used for automatically releasing hydrogen if the hydrogen pressure exceeds a specific value in the at least one reaction chamber. It is preferred that the safety means is an outlet, preferably a gas outlet, provided with a safety valve. The safety valve provided with the at least one outlet, preferably gas outlet and more preferably a hydrogen gas outlet, of the safety means may be any kind of safety valve well known to the man skilled in the art which opens automatically under a hydrogen pressure of at least 2 bar, preferably of at least 2.5 bar, generated in the at least one reaction chamber. For example, the safety valve of the safety means is any kind of open-close valve known to the man skilled in the art. In one embodiment of the present invention, the safety valve of the safety means is a spring valve.

In one embodiment of the present invention, the at least one reaction chamber of the portable hydrogen generating reactor is provided with three inlets and three outlets. It is preferred that one outlet is a hydrogen gas outlet and one outlet is a safety means such as an outlet, preferably a gas outlet and more preferably a hydrogen gas outlet, provided with a safety valve.

As already described above, it is appreciated that the at least one reaction chamber comprises an inlet being suitable to feed the at least one reaction chamber with water. Thus, it is required that the at least one reaction chamber is provided with one inlet being a water inlet suitable for the aqueous solution. Additionally, the at least one reaction chamber may be provided with one outlet being a water outlet.

In one embodiment of the present invention, the at least one reaction chamber is provided with one inlet being a water inlet and one outlet being a water outlet. For example, the at least one reaction chamber is provided with a water outlet which is integrated in the water inlet.

A valve or other means may be used to control the inflow or outflow of water through the water inlet and/or water outlet of the at least one reaction chamber. Thus, it is appreciated that the water inlet and/or water outlet of the at least one reaction chamber preferably comprises a valve.

It is appreciated that the valve of the water inlet and/or water outlet may be any kind of valve well known to the man skilled in the art used for controlling the inflow or outflow of water through a water inlet and/or water outlet. For example, the valve of the water inlet and/or water outlet is any kind of open-close valve known to the man skilled in the art. In one embodiment of the present invention, the valve of the water inlet and/or water outlet is a spring valve.

In one embodiment of the present invention, the at least one reaction chamber is a closed chamber. Preferably, the volume of the at least one reaction chamber ranges from 0.5 l to 10 l, preferably from 1 l to 7.5 l, more preferably from 1 l to 5 l and most preferably from 2 l to 3 l. It is further appreciated that the volume of the at least one reaction chamber is proportional to the volume of the at least one catalyst chamber provided in the portable hydrogen generating reactor and the at least one hydrogen-containing suspension chamber provided in the portable hydrogen generating reactor. That is to say the higher the volumes of the at least one catalyst chamber and the at least one hydrogen-containing suspension chamber provided in the portable hydrogen generating reactor the higher the volume of the at least one reaction chamber.

The at least one reaction chamber of the inventive portable hydrogen generating reactor combines a diversity of functions. In particular, the at least one reaction chamber is capable of generating hydrogen in a sufficient amount. Furthermore, the at least one reaction chamber of the inventive portable hydrogen generating reactor is capable of storing hydrogen such that an uncontrolled or unwanted release of hydrogen from the at least one reaction chamber is reduced.

According to the present invention, the at least one reaction chamber comprises an inner ziplock. Said inner ziplock preferably divides the at least one reaction chamber in a hydrogen storage zone and a hydrogen generating zone.

The inner ziplock may be any conventional ziplock means known to the skilled person. Examples of ziplocks that may be used in the present invention are ziplocks from the Dow Chemical Company, USA, S. C. Johnson & Son, USA, the Glad Company, USA or the Reynolds Group Holding, USA, and others.

In one embodiment of the present invention, the inner ziplock may be any conventional ziplock allowing the release of generated hydrogen from the hydrogen generating zone into the hydrogen storage zone. For example, the inner ziplock comprises at least one channel allowing the release of generated hydrogen from the hydrogen generating zone into the hydrogen storage zone. In one embodiment of the present invention, the inner ziplock comprises at least two channels or a plurality of channels allowing the release of generated hydrogen from the hydrogen generating zone into the hydrogen storage zone. It is preferred that the inner ziplock comprises one channel allowing the release of generated hydrogen from the hydrogen generating zone into the hydrogen storage zone.

In one embodiment of the present invention, the inner ziplock comprises at least one channel having a diameter of from 0.1 to 1 mm. For example, the inner ziplock comprises at least two channels or a plurality of channels each having a diameter of from 0.1 to 1 mm. It is preferred that the inner ziplock comprises one channel having a diameter of from 0.1 to 1 mm.

In one embodiment of the present invention, the inner ziplock comprises at least one channel having a diameter of from 0.1 to 0.6 mm, more preferably from 0.1 to 0.4 mm and most preferably from 0.1 to 0.2 mm.

In this regard, it is appreciated that the at least one channel of the inner ziplock opens automatically under hydrogen pressure which is generated in the hydrogen generating zone. For example, the at least one channel of the inner ziplock opens automatically under a hydrogen pressure of at least 1 bar generated in the hydrogen generating zone or of at least 1.5 bar generated in the hydrogen generating zone.

If the at least one channel of the inner ziplock opens automatically under hydrogen pressure, it is preferred that the at least one channel is a one-way-channel. That is to say the at least one channel of the inner ziplock does not open automatically under hydrogen pressure effected in the hydrogen storage zone.

In order to release hydrogen from the at least one reaction chamber, at least two outlets of the at least one reaction chamber are located at the hydrogen storage zone of the at least one reaction chamber. It is thus appreciated that the at least two outlets of the at least one reaction chamber being located at the hydrogen storage zone of the at least one reaction chamber are preferably a hydrogen gas outlet and a gas outlet provided with a safety valve.

Additionally or alternatively, it is appreciated that the reaction chamber is fed with the hydrogen-containing suspension and a suitable catalyst for generating hydrogen. It is thus appreciated that at least two inlets of the at least one reaction chamber are located at the hydrogen generating zone of the at least one reaction chamber.

In one embodiment of the present invention, the at least two inlets of the at least one reaction chamber being located at the hydrogen generating zone of the at least one reaction chamber are connected to the at least one catalyst chamber and the at least one hydrogen-containing suspension chamber. It is further appreciated that at least two inlets located at the hydrogen generating zone are independently connected to the at least one catalyst chamber and the at least one hydrogen-containing suspension chamber.

Additionally or alternatively, it is appreciated that the reaction chamber is fed with an aqueous solution required for initiating the generation of hydrogen. It is thus appreciated that the water inlet of the at least one reaction chamber is located at the hydrogen generating zone of the at least one reaction chamber. Additionally or alternatively, the at least one reaction chamber comprises a water outlet, said water outlet of the at least one reaction chamber is preferably located at the hydrogen generating zone of the at least one reaction chamber.

In one embodiment of the present invention, the at least one reaction chamber comprises two outlets being located at the hydrogen storage zone, preferably one outlet is a hydrogen gas outlet and one outlet is a gas outlet provided with a safety valve. Additionally, the at least one reaction chamber comprises two inlets being located at the hydrogen generating zone, preferably one inlet of the at least one reaction chamber is connected to the at least one catalyst chamber and one inlet is connected to the at least one hydrogen-containing suspension chamber. Additionally, the at least one reaction chamber comprises a water inlet being located at the hydrogen generating zone of the at least one reaction chamber. Additionally or alternatively, the at least one reaction chamber comprises a water outlet being located at the hydrogen generating zone of the at least one reaction chamber. In one embodiment of the present invention, the at least one reaction chamber comprises a water outlet and a water inlet, preferably the water outlet is integrated in the water outlet.

As already mentioned above, the at least one reaction chamber of the portable hydrogen generating reactor is fed with at least one catalyst for generating hydrogen.

It is thus one specific requirement of the present invention that at least one catalyst chamber is connected to at least one inlet of the at least one reaction chamber. In one embodiment of the present invention, the at least one catalyst chamber comprises a catalyst-containing liquid medium. In order to control the flow of the at least one catalyst between the at least one catalyst chamber and the at least one reaction chamber, at least one valve controlling the flow of the at least one catalyst is located between the at least one catalyst chamber and the at least one reaction chamber.

It is appreciated that the valve may be any kind of valve well known to the man skilled in the art used for controlling of the flow of a liquid medium. For example, the valve located between the at least one catalyst chamber and the at least one reaction chamber is any kind of open-close valve known to the man skilled in the art. In one embodiment of the present invention, the valve located between the at least one catalyst chamber and the at least one reaction chamber is a spring valve.

The at least one catalyst chamber may be of any size or shape provided that it is suitable for storing and releasing the at least one catalyst, preferably a catalyst solution. It is thus appreciated that the at least one catalyst chamber may be any kind of chamber used for storing and releasing a catalyst, preferably in the form of a catalyst solution or catalyst suspension. For example, the at least one catalyst chamber may be a chamber ranging from 0.1 l to 2 l, preferably from 0.2 l to 1.5 l, more preferably from 0.3 l to 1 l and most preferably from 0.3 l to 0.75 l.

It is further appreciated that the at least one reaction chamber of the portable hydrogen generating reactor is fed with a hydrogen-containing suspension suitable for generating hydrogen.

It is thus one specific requirement of the present invention that at least one hydrogen-containing suspension chamber is connected to at least one inlet of the at least one reaction chamber. In one embodiment of the present invention, the at least one hydrogen-containing suspension chamber comprises a suspension containing a water-free liquid medium and hydrogen-releasing particles dispersed therein. In order to control the flow of the at least one hydrogen-containing suspension between the at least one hydrogen-containing suspension chamber and the at least one reaction chamber, at least one valve controlling the flow of the hydrogen-containing suspension is located between the at least one hydrogen-containing suspension chamber and the at least one reaction chamber.

It is appreciated that the valve may be any kind of valve well known to the man skilled in the art used for controlling of the flow of a liquid medium. For example, the valve located between the at least one hydrogen-containing suspension chamber and the at least one reaction chamber is any kind of open-close valve known to the man skilled in the art. In one embodiment of the present invention, the valve located between the at least one hydrogen-containing suspension chamber and the at least one reaction chamber is a spring valve.

The at least one hydrogen-containing suspension chamber may be of any size or shape provided that it is suitable for storing and releasing the hydrogen-containing suspension. It is thus appreciated that the at least one hydrogen-containing suspension chamber may be any kind of chamber used for storing and releasing a hydrogen-containing suspension. For example, the at least one hydrogen-containing suspension chamber may be a chamber ranging from 0.1 l to 7.5 I, preferably from 0.2 l to 5 l, more preferably from 0.3 l to 4 l and most preferably from 0.3 l to 3 l.

It is one specific requirement of the instant invention that the portable hydrogen generating reactor is made from an elastic, plastic material. According to the invention, all parts of the portable hydrogen generating reactor are made from an elastic, plastic material. Accordingly, the at least three inlets, the at least two outlets, the valve located between the at least one catalyst chamber and the at least one reaction chamber, the at least one valve located between the at least one hydrogen-containing suspension chamber and the at least one reaction chamber, the at least one reaction chamber, the at least one catalyst chamber and the at least one hydrogen-containing suspension chamber of the portable hydrogen generating reactor are made from an elastic, plastic material.

It is to be noted that the elastic, plastic material may be any kind of material known to the skilled person. It is preferred that the elastic, plastic material is mechanically and/or chemically resistant. Preferably, the elastic, plastic material is mechanically and chemically resistant. In one embodiment of the present
invention, the elastic, plastic material is mechanically resistant to a pressure of up to 5 bar, preferably of up to 4 bar.

Additionally or alternatively, the elastic, plastic material is mechanically resistant against aqueous solutions, water-free liquid mediums, hydrogen releasing particles, catalyst solutions, catalyst suspensions, reductive agents, oxidizing agents and the like.

For example, the elastic, plastic material is selected from the group comprising polyurethane, polyethylene, polypropylene, silicon rubber, polyvinylchloride and mixtures thereof.

The portable hydrogen generating reactor in accordance with the present invention is clearly improved in comparison to corresponding reactors described in the prior art. In particular, the elastic, plastic material of which the reactor is made from allows the preparation of a very light portable hydrogen generating reactor and, furthermore, a reactor which is easy to transport as it can be easily rolled up or folded up, and is therefore suitable for any field or portable use. Furthermore, the portable hydrogen generating reactor allows an efficient and controlled generation of hydrogen. In addition thereto, the portable hydrogen generating reactor reduces the costs for hydrogen generation as the safety requirements during storage, transportation, dosing and/or handling and, moreover, the costs for the materials required for preparing the portable hydrogen generating reactor are reduced.

In view of the very good results obtained regarding the generation of hydrogen by using the portable hydrogen generating reactor as defined above, a further aspect of the present invention refers to use of the portable hydrogen generating reactor for generating hydrogen.

The invention is explained in the following in more detail in connection with the drawing with regard to one embodiment of portable hydrogen generating reactor.

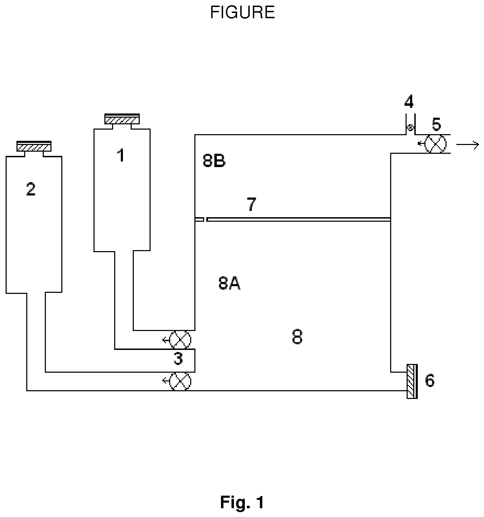

As shown in Fig. 1, one embodiment that details aspects of the inventive portable hydrogen generating reactor comprises a hydrogen-containing suspension chamber (1) containing a hydrogen-containing suspension and hydrogen-releasing particles dispersed therein. Connected with the hydrogen-containing suspension chamber (1) is an inlet of the at least one reaction chamber (8) through which the reaction chamber (8) is fed with the hydrogen-containing suspension from the hydrogen-containing suspension chamber **(1).** The hydrogen-containing suspension chamber **(1)** and the reaction chamber **(8)** are separated by a valve **(3)** through which the feeding of the reaction chamber **(8)** with the hydrogen-containing suspension from the hydrogen-containing suspension chamber **(1)** is controlled, i.e. the valve **(3)** is located between the hydrogen-containing suspension chamber **(1)** and the reaction chamber **(8).** The inventive portable hydrogen generating reactor further comprises a catalyst chamber **(2)** containing a solution or suspension comprising at least one catalyst. Connected with the catalyst chamber **(2)** is an inlet of the at least one reaction chamber **(8)** through which the reaction chamber **(8)** is fed with the catalyst from the catalyst chamber **(2).** The catalyst chamber **(2)** and the reaction chamber **(8)** are separated by a valve **(3)** through which the feeding of the reaction chamber **(8)** with the catalyst solution from the catalyst chamber **(2)** is controlled, i.e. the valve **(3)** is located between the catalyst chamber **(2)** and the reaction chamber **(8).** The valves **(3)** separating the hydrogen-containing suspension chamber **(1)** and the reaction chamber **(8)** and the catalyst chamber **(2)** and the reaction chamber **(8),** respectively, are operated independently from each other.

The reaction chamber **(8)** is further equipped with a safety means such as an outlet provided with a safety valve **(4)** and a hydrogen gas outlet **(5).** The hydrogen gas outlet **(5)** comprises a valve which opens automatically under a hydrogen pressure of at least 1 bar. Furthermore, the reaction chamber **(8)** is equipped with a water inlet and a water outlet such that the water outlet is integrated in the water inlet **(6).**

The reaction chamber **(8)** of the portable hydrogen generating reactor is preferably divided in a hydrogen storage zone **(8B)** and a hydrogen generating zone **(8A)** by using an inner ziplock (7). The inner ziplock **(7)** comprises a channel having a diameter of from 0.1 to 1 mm which opens automatically under a hydrogen pressure of at least 1 bar generated in the hydrogen generating zone **(8A).**

The hydrogen generating zone of the reaction chamber **(8)** may be fed with an aqueous solution such as water or filtrated urine through water inlet/outlet **(6)** such that the reaction chamber **(8)** is filled with the desired amount of aqueous solution. Water inlet/outlet **(6)** may then be closed in order to interrupt the inflow of the aqueous solution in the reaction chamber **(8).** A pressure, e.g. as achieved by manually pressing the hydrogen-containing suspension chamber **(1)** and/or the catalyst chamber **(2),** opens valves **(3),** which are preferably spring valves, such as to release the hydrogen-containing suspension from the hydrogen-containing suspension chamber **(1)** and the catalyst solution from the catalyst chamber **(2)** into the reaction chamber **(8).** A decrease of pressure closes valves **(3)** such as to interrupt the flow of hydrogen-containing suspension from hydrogen-containing suspension chamber **(1)** into the reaction chamber **(8)** and the flow of catalyst from the catalyst chamber **(2)** into the reaction chamber **(8).**

The contact between the hydrogen-containing suspension, the catalyst and aqueous solution in the hydrogen generating zone **(8A)** of the reaction chamber **(8)** initiates the hydrogen generation from the hydrogen-containing suspension.

To ensure a thoroughly mixing of the hydrogen-containing suspension, the catalyst and aqueous solution in the hydrogen generating zone **(8A)** of the reaction chamber **(8),** the portable hydrogen generating reactor may be shaken. The hydrogen generation from the hydrogen-containing suspension builds up a hydrogen pressure in the hydrogen generating zone **(8A)** such that the channel provided in the inner ziplock **(7)** automatically opens if a pressure of at least 1 bar is reached.

Accordingly, the hydrogen released in the hydrogen storage zone **(8B)** from the hydrogen generating zone **(8A)** also causes an increase of hydrogen pressure in the hydrogen storage zone **(8A)** of the reaction chamber **(8).** If the hydrogen pressure in the hydrogen storage zone **(8B)** exceeds a value of at least 1 bar, the valve of the hydrogen gas outlet **(5)** opens such that hydrogen is released from the portable hydrogen generating reactor.

The hydrogen released from the portable hydrogen generating reactor through hydrogen gas outlet **(5)** may, optionally, be fed into a dryer and/or into a fuel cell/gas generator.

### Figures

Fig. **1** illustrates an embodiment of the present portable hydrogen generating reactor.

## Claims

1. A portable hydrogen generating reactor, comprising
a) at least one reaction chamber provided with at least three inlets and at least two outlets,
b) at least one catalyst chamber connected to at least one inlet of the at least one reaction chamber, wherein at least one valve is located between the at least one catalyst chamber and the at least one reaction chamber, and
c) at least one hydrogen-containing suspension chamber connected to at least one inlet of the at least one reaction chamber, wherein at least one valve is located between the at least one hydrogen-containing suspension chamber and the at least one reaction chamber and wherein the at least one hydrogen-containing suspension chamber is suitable for storing and releasing a hydrogen containing suspension comprising at least one water-free liquid medium and hydrogen-releasing particles,
wherein all parts of the portable hydrogen generating reactor are made from an elastic plastic material and wherein the at least one reaction chamber comprises an inner ziplock dividing the at least one reaction chamber in a hydrogen storage zone and a hydrogen generating zone.

2. The portable hydrogen generating reactor according to claim 1, wherein at least one outlet of the at least one reaction chamber is a gas outlet, preferably a hydrogen gas outlet.

3. The portable hydrogen generating reactor according to claim 2, wherein the at least one gas outlet comprises a valve which opens automatically under a hydrogen pressure of at least 1 bar.

4. The portable hydrogen generating reactor according to any one of claims 1 to 3, wherein the at least one reaction chamber is provided with three inlets and three outlets, preferably one outlet is a hydrogen gas outlet and one outlet is a gas outlet provided with a safety valve.

5. The portable hydrogen generating reactor according to claim 4, wherein one inlet of the at least one reaction chamber is a water inlet and/or one outlet is a water outlet.

6. The portable hydrogen generating reactor according to claim 5, wherein the water outlet is integrated in the water inlet.

7. The portable hydrogen generating reactor according to claim 1, wherein the inner ziplock comprises at least one channel having a diameter of from 0.1 to 1 mm.

8. The portable hydrogen generating reactor according to claim 7, wherein the at least one channel of the inner ziplock opens automatically under a hydrogen pressure of at least 1 bar generated in the hydrogen generating zone.

9. The portable hydrogen generating reactor according to any one of claims 1 and 7 to 8, wherein at least two outlets of the at least one reaction chamber, preferably a hydrogen gas outlet and a gas outlet provided with a safety valve, are located at the hydrogen storage zone of the at least one reaction chamber and/or at least two inlets of the at least one reaction chamber are located at the hydrogen generating zone of the at least one reaction chamber and/or a water inlet of the at least one reaction chamber is located at the hydrogen generating zone of the at least one reaction chamber and/or a water outlet of the at least one reaction chamber is located at the hydrogen generating zone of the at least one reaction chamber.

10. The portable hydrogen generating reactor according to claim 9, wherein at least two inlets located at the hydrogen generating zone are independently connected to the at least one catalyst chamber and the at least one hydrogen-containing suspension chamber.

11. The portable hydrogen generating reactor according to any one of claims 1 to 10, wherein the portable hydrogen generating reactor is made from an elastic plastic material selected from the group comprising polyurethane, polyethylene, polypropylene, silicon rubber, polyvinylchloride and mixtures thereof.

12. The portable hydrogen generating reactor according to any one of claims 1 to 11, wherein the at least one catalyst chamber comprises a catalyst-containing liquid medium.

13. The portable hydrogen generating reactor according to any one of claims 1 to 12, wherein the at least one hydrogen-containing suspension chamber comprises a suspension containing a water-free liquid medium and hydrogen-releasing particles dispersed therein.

14. Use of a portable hydrogen generating reactor as defined in any one of claims 1 to 13 for generating hydrogen.

## Patentansprüche

1. Ein tragbarer Wasserstoff erzeugender Reaktor, umfassend
a) mindestens eine Reaktionskammer, die mit mindestens drei Einlässen und mindestens zwei Auslässen versehen ist,
b) mindestens eine Katalysatorkammer, die mit mindestens einem Einlass der mindestens einen Reaktionskammer verbunden ist, wobei mindestens ein Ventil zwischen der mindestens einen Katalysatorkammer und der mindestens einen Reaktionskammer angeordnet ist, und
c) mindestens eine wasserstoffhaltige Suspensionskammer, die mit mindestens einem Einlass der mindestens einen Reaktionskammer verbunden ist, wobei sich mindestens ein Ventil zwischen der mindestens einen wasserstoffhaltigen Suspensionskammer und der mindestens einen Reaktionskammer befindet und wobei die mindestens eine wasserstoffhaltige Suspensionskammer geeignet ist, eine wasserstoffhaltige Suspension enthaltend mindestens ein wasserfreies flüssiges Medium und wasserstofffreisetzende Partikel zu speichern und freizusetzen,
wobei alle Teile des tragbaren Wasserstoff erzeugenden Reaktors aus einem elastischen Kunststoffmaterial hergestellt sind und wobei die mindestens eine Reaktionskammer einen inneren Reißverschluss aufweist, der die mindestens eine Reaktionskammer in eine Wasserstoffspeicherzone und eine Wasserstofferzeugungszone unterteilt.

2. Der tragbare Wasserstoff erzeugende Reaktor nach Anspruch 1, wobei mindestens ein Auslass der mindestens einen Reaktionskammer ein Gasauslass, vorzugsweise ein Wasserstoffgasauslass, ist.

3. Der tragbare Wasserstoff erzeugende Reaktor nach Anspruch 2, wobei der mindestens eine Gasauslass ein Ventil umfasst, das sich automatisch unter einem Wasserstoffdruck von mindestens 1 bar öffnet.

4. Der tragbare Wasserstoff erzeugende Reaktor nach einem der Ansprüche 1 bis 3, wobei die mindestens eine Reaktionskammer mit drei Einlässen und drei Auslässen versehen ist, wobei vorzugsweise ein Auslass ein Wasserstoffgasauslass und ein Auslass ein Gasauslass ist, der mit einem Sicherheitsventil versehen ist.

5. Der tragbare Wasserstoff erzeugende Reaktor nach Anspruch 4, wobei ein Einlass der mindestens einen Reaktionskammer ein Wassereinlass und / oder ein Auslass ein Wasserauslass ist.

6. Der tragbare Wasserstoff erzeugende Reaktor nach Anspruch 5, wobei der Wasserauslass in den Wassereinlass integriert ist.

7. Der tragbare Wasserstoff erzeugende Reaktor nach Anspruch 1, wobei der innere Reißverschluss mindestens einen Kanal mit einem Durchmesser von 0,1 bis 1 mm umfasst.

8. Der tragbare Wasserstoff erzeugende Reaktor nach Anspruch 7, wobei der mindestens eine Kanal des inneren Reißverschlusses automatisch unter einem Wasserstoffdruck von mindestens 1 bar öffnet, der in der Wasserstofferzeugungszone erzeugt wird.

9. Der tragbare Wasserstoff erzeugende Reaktor nach einem der Ansprüche 1 und 7 bis 8, wobei mindestens zwei Auslässe der mindestens einen Reaktionskammer, vorzugsweise ein Wasserstoffgasauslass und ein Gasauslass, der mit einem Sicherheitsventil versehen ist, an der Wasserspeicherungszone der mindestens einen Reaktionskammer angeordnet sind und / oder mindestens zwei Einlässe der mindestens einen Reaktionskammer an der Wasserstofferzeugungszone der mindestens einen Reaktionskammer angeordnet sind und / oder ein Wassereinlasses der mindestens einen Reaktionskammer an der Wasserstofferzeugungszone der mindestens einen Reaktionskammer angeordnet ist und / oder ein Wasserauslass der mindestens einen Reaktionskammer an der Wasserstofferzeugungszone der mindestens einen Reaktionskammer angeordnet ist.

10. Der tragbare Wasserstoff erzeugende Reaktor nach Anspruch 9, wobei mindestens zwei Einlässe, die in der Wasserstofferzeugungszone angeordnet sind, unabhängig mit der mindestens einen Katalysatorkammer und der mindestens einen Wasserstoff enthaltenden Suspensionskammer verbunden sind.

11. Der tragbare Wasserstoff erzeugende Reaktor nach einem der Ansprüche 1 bis 10, wobei der tragbare Wasserstoff erzeugende Reaktor aus einem elastischen Kunststoffmaterial hergestellt ist, das aus der Gruppe ausgewählt ist, die Polyurethan, Polyethylen, Polypropylen, Silikonkautschuk, Polyvinylchlorid und Mischungen davon umfasst.

12. Der tragbare Wasserstoff erzeugende Reaktor nach einem der Ansprüche 1 bis 11, wobei die mindestens eine Katalysatorkammer ein katalysatorhaltiges flüssiges Medium umfasst.

13. Der tragbare Wasserstoff erzeugende Reaktor nach einem der Ansprüche 1 bis 12, wobei die mindestens eine wasserstoffhaltige Suspensionskammer eine Suspension umfasst, die ein wasserfreies flüssiges Medium und darin dispergierte wasserstofffreisetzende Partikel enthält.

14. Verwendung eines tragbaren Wasserstoff erzeugenden Reaktors nach einem der Ansprüche 1 bis 13 zur Erzeugung von Wasserstoff.

## Revendications

1. Un réacteur portable produisant de l'hydrogène, comprenant
a) au moins une chambre de réaction pourvue d'au moins trois entrées et d'au moins deux sorties,
b) au moins une chambre de catalyseur reliée à au moins une entrée de la au moins une chambre de réaction, dans laquelle au moins une soupape est située entre la au moins une chambre de catalyseur et la au moins une chambre de réaction, et
c) au moins une chambre de suspension contenant de l'hydrogène reliée à au moins une entrée de la au moins une chambre de réaction, dans lequel au moins une soupape étant située entre la au moins une chambre de suspension contenant de l'hydrogène et la au moins une chambre de réaction et dans lequel la au moins une chambre de suspension contenant de l'hydrogène est susceptible de stocker et de libérer une suspension contenant de l'hydrogène comprenant au moins un milieu liquide exempt d'eau et des particules libérant de l'hydrogène,
dans lequel toutes les parties du réacteur portable produisant de l'hydrogène sont constituées d'un matériau plastique élastique et dans lequel la au moins une chambre de réaction comprend un séparateur interne divisant la au moins une chambre de réaction dans une zone de stockage d'hydrogène et une zone de génération d'hydrogène.

2. Le réacteur portable produisant de l'hydrogène selon la revendication 1, dans lequel au moins une sortie de la au moins une chambre de réaction est une sortie de gaz, de préférence une sortie de gaz hydrogène.

3. Le réacteur portable produisant de l'hydrogène selon la revendication 2, dans lequel la au moins une sortie de gaz comprend une soupape qui s'ouvre automatiquement sous une pression d'hydrogène d'au moins 1 bar.

4. Le réacteur portable produisant de l'hydrogène selon l'une quelconque des revendications 1 à 3, dans lequel la au moins une chambre de réaction est pourvue de trois entrées et trois sorties, de préférence une sortie est une sortie de gaz hydrogène et une sortie est une sortie de gaz munie d'une soupape de sécurité .

5. Le réacteur portable produisant de l'hydrogène selon la revendication 4, dans lequel une entrée de la au moins une chambre de réaction est une entrée d'eau et / ou une sortie est une sortie d'eau.

6. Le réacteur portable produisant de l'hydrogène selon la revendication 5, dans lequel la sortie d'eau est intégrée dans l'entrée d'eau.

7. Le réacteur portable produisant de l'hydrogène selon la revendication 1, dans lequel le séparateur interne comprend au moins un canal ayant un diamètre de 0,1 à 1 mm.

8. Le réacteur portable produisant de l'hydrogène selon la revendication 7, dans lequel l'au moins un canal du séparateur interne s'ouvre automatiquement sous une pression d'hydrogène d'au moins 1 bar générée dans la zone de génération d'hydrogène.

9. Le réacteur portable produisant de l'hydrogène selon l'une quelconque des revendications 1 et 7 à 8, dans lequel au moins deux sorties de la au moins une chambre de réaction, de préférence une sortie de gaz hydrogène et une sortie de gaz munies d'une soupape de sécurité sont situées à la zone de stockage de la au moins une chambre de réaction et / ou au moins deux entrées de la au moins une chambre de réaction sont situées dans la zone de génération d'hydrogène de la au moins une chambre de réaction et / ou une entrée d'eau de la au moins une chambre de réaction est situé dans la zone de génération d'hydrogène de la au moins une chambre de réaction et / ou une sortie d'eau de la au moins une chambre de réaction est située dans la zone de génération d'hydrogène de la au moins une chambre de réaction.

10. Le réacteur portable produisant de l'hydrogène selon la revendication 9, dans lequel au moins deux entrées situées dans la zone de génération d'hydrogène sont connectées indépendamment à la au moins une chambre de catalyseur et à la au moins une chambre de suspension contenant de l'hydrogène.

11. Le réacteur portable produisant de l'hydrogène selon l'une quelconque des revendications 1 à 10, dans lequel le réacteur portable produisant de l'hydrogène est fabriqué à partir d'un matériau plastique élastique choisi dans le groupe comprenant le polyuréthane, le polyéthylène, le polypropylène, le caoutchouc de silicone, le polychlorure de vinyle et leurs mélanges.

12. Le réacteur portable produisant de l'hydrogène selon l'une quelconque des revendications 1 à 11, dans lequel la au moins une chambre de catalyseur comprend un milieu liquide contenant un catalyseur.

13. Le réacteur portable produisant de l'hydrogène selon l'une quelconque des revendications 1 à 12, dans lequel la au moins une chambre de suspension contenant de l'hydrogène comprend une suspension contenant un milieu liquide exempt d'eau et des particules libérant de l'hydrogène dispersées dans celui-ci.

14. Utilisation d'un réacteur portable produisant de l'hydrogène tel que défini dans l'une quelconque des revendications 1 à 13 pour générer de l'hydrogène.
